## Europäisches Patentamt
## European Patent Office
## Office européen des brevets

(19)

(11) Veröffentlichungsnummer : **0 180 660**
**B1**

(12)

# EUROPÄISCHE PATENTSCHRIFT

(45) Veröffentlichungstag der Patentschrift :
07.09.88

(51) Int. Cl.⁴ : **A 01 D 41/12**, G 01 N   1/20

(21) Anmeldenummer : **84113448.9**

(22) Anmeldetag : **07.11.84**

(54) Verschlussvorrichtung für den Sammelbehälter einer Erntebergungsmaschine.

(73) Patentinhaber : **DEERE & COMPANY**
**1 John Deere Road**
**Moline Illinois 61265 (US)**

(72) Erfinder : **Lenski, Ralph, Dipl.-Ing.**
**Dunantstrasse 10**
**D-6660 Zweibrücken (DE)**
Erfinder : **Quoiffy, Harald**
**Etzelweg 156**
**D-6660 Zweibrücken (DE)**

(74) Vertreter : **Feldmann, Bernhard et al**
**DEERE & COMPANY European Office, Patent Department Steubenstrasse 36-42 Postfach 503**
**D-6800 Mannheim 1 (DE)**

(43) Veröffentlichungstag der Anmeldung :
**14.05.86 Patentblatt 86/20**

(45) Bekanntmachung des Hinweises auf die Patenterteilung : **07.09.88 Patentblatt 88/36**

(84) Benannte Vertragsstaaten :
**BE DE FR GB IT SE**

(56) Entgegenhaltungen :
**FR-A-   949 394**
**FR-A- 1 052 186**
**FR-A- 2 269 288**
**FR-A- 2 342 917**
**FR-A- 2 484 337**
**US-A- 3 253 470**
**JOHN DEERE MÄHDRESCHER gemäss Zeichnung ZM-3983**

EP 0 180 660 B1

**Beschreibung**

Die Erfindung bezieht sich auf eine Verschlußvorrichtung für den Sammelbehälter einer Erntebergungsmaschine, insbesondere Mähdrescher, mit einer im Sammelbehälter vorgesehenen, zur Entnahme von Erntegutproben ausgebildeten Durchlaßöffnung, die mittels einer verschwenkbaren Klappe verschließbar ist, die unterhalb einer Fördervorrichtung verschwenkbar ist.

Es ist bereits ein Sammelbehälter für einen Mähdrescher mit einer Durchlaßöffnung zur Entnahme von Erntegutproben bekannt, die über eine verschwenkbare Klappe verschließbar ist. Die Klappe ist hierzu an ihrer oberen Kante gelenkig angeschlossen und liegt in ihrer die Durchlaßöffnung verschließenden Stellung mittels eines Dichtringes gegen die Innenseite der Rückwand des Sammelbehälters an. Die Durchlaßöffnung wird durch Zurückschwenkung etwas freigegeben, so daß die Bedienungsperson Erntegutproben aus dem Sammelbehälter entnehmen kann. Ist beispielsweise eine derartige Durchlaßöffnung im Bereich der Rückwand der Fahrerkabine vorgesehen, die gleichzeitig auch Vorderwand des Sammelbehälters sein kann, so entsteht beim Zurückschwenken der Klappe ein Druckabfall in der Kabine, da zur Entnahme der Erntegutproben die Öffnung relativ lange freigegeben wird. Außerdem lassen sich nur dann Erntegutproben entnehmen, wenn der Sammelbehälter schon etwas mit Erntegut gefüllt ist (John Deere Mähdrescher 1055 gemäß Zeichnung ZM-3983).

Es ist ferner ein Sammelbehälter für Erntegut bekannt, in dem ein Förderorgan angeordnet ist, das mit seinem Abgabeende oberhalb einer im Sammelbehälter vorgesehenen Öffnung endet. Die Öffnung ist mittels einer an der Seitenwand des Sammelbehälters gelenkig angeschlossenen Klappe verschließbar, die von ihrer die Öffnung verschließenden Stellung in eine weitere Stellung verschwenkbar ist, so daß sie unterhalb des Abgabeendes der Fördervorrichtung endet. Hierdurch bleibt jedoch die Durchlaßöffnung ebenfalls verschlossen. Das von der Fördervorrichtung abgegebene Erntegut kann nunmehr über die Klappe durch die Durchlaßöffnung in einen daran anschließenden Trichter geleitet werden (FR-A-2 269 288).

Demgegenüber liegt der Erfindung die Aufgabe zugrunde, die Verschlußvorrichtung derart auszubilden und anzuordnen, daß mittels der Verschlußvorrichtung auf einfache Weise Erntegutproben aus dem Sammelbehälter entnommen werden können, ohne daß beim Entnahmevorgang des Erntegutes aus dem Sammelbehälter ein zu großer Druckabfall in der Fahrerkabine auftritt. Diese Aufgabe ist dadurch gelöst worden, daß die Klappe zur Aufnahme von Erntegutproben einen Behälter aufweist, der eine Vorderwand und eine Rückwand sowie die Vorder- und Rückwand miteinander verbindende Seitenwände aufweist, wobei in der ersten die Durchlaßöffnung verschließenden Stellung die Rückwand sich in den Sammelbehälter erstreckt und unterhalb der Fördervorrichtung endet und in einer zweiten Stellung zur Entnahme der Erntegutproben die Durchlaßöffnung ebenfalls verschließt. Durch die vorteilhafte Ausbildung der Klappe, die Bestandteil eines Behälters ist, lassen sich auf einfache Weise auch bereits dann Erntegutproben entnehmen, wenn der Sammelbehälter noch nicht mit Erntegut gefüllt ist, da ein Teil des aus der Fördervorrichtung abgegebenen Erntegutes in den Behälter der Verschlußvorrichtung abgegeben werden kann. Die Bedienungsperson braucht also nicht zu warten, bis sich im Sammelbehälter so viel Erntegut angesammelt hat, daß die Bedienungsperson von der Fahrerkabine aus das Erntegut entnehmen kann. Da die Verschlußvorrichtung zwei Wandelemente aufweist, können diese einmal in der Stellung zur Aufnahme des Erntegutes und zum anderen in der Stellung zur Entnahme des Erntegutes aus dem Sammelbehälter in einer Schließstellung gehalten werden, so daß der Druckabfall aus der Fahrerkabine klein gehalten werden kann. Durch die vorteilhafte Ausbildung des Behälters der Verschlußvorrichtung läßt sich in der zweiten Stellung zur Entnahme des Erntegutes sicherstellen, daß kein Erntegut aus dem Behälter abfließt. Nach Prüfung der Probe läßt sich der Behälter wieder in eine Stellung zurückschwenken, in der er eine Lage unterhalb der Fördervorrichtung einnimmt. Das in dem Behälter aufgenommene Erntegut wird dann dem Sammelbehälter wieder zugeführt. Die Verwendung einer derartigen Klappe mit dem zugehörigen Behälter gestattet also recht kurze Öffnungszeiten für die Durchlaßöffnung im Sammelbehälter.

In vorteilhafter Weise bildet die Rückwand des Behälters in der ersten Stellung mit der Horizontalen bzw. der Standfläche der Erntebergungsmaschine einen spitzen Winkel, der größer ist als der Schüttwinkel des auf die Rückwand auftreffenden Erntegutes. Befindet sich die Verschlußvorrichtung in ihrer normalen Stellung, in der Behälter in das Innere des Sammelbehälters ragt, so wird kein Erntegut über den Behälter aufgenommen, da das auf die Rückwand auftreffende Erntegut durch die geneigt verlaufende Rückwand ohne weiteres abrutschen kann und in den Sammelbehälter gelangt. Vorteilhaft ist es ferner, daß in einer zweiten bzw. einer Mittelstellung zumindest die obere Begrenzung der Rückwand und der Vorderwand einen in etwa gleichen Abstand zur oberen Kante der Durchlaßöffnung aufweist. Durch Verschwenkung der Verschlußvorrichtung in eine Mittelstellung wird die Rückwand so weit nach oben verschwenkt, daß kein Erntegut mehr aus dem Behälter herausgleiten kann. Dabei ist es vorteilhaft, daß die Vorder-, die Rück- und die Seitenwände einen Trichter zur Aufnahme von Erntegutproben bilden. Eine einfache Lagerung der Verschlußvorrichtung erhält man dadurch, daß die Vorderwand und die Rückwand trichterförmig zusammenlaufen und im Bereich der Stelle, an der die Vorder- und Rückwand zusammentreffen, ein nach innen gewölbtes Lager bilden, das auf einem Wulst im Bereich der unteren Kante der Durchlaßöffnung aufsitzt.

Andererseits ist es nach der Erfindung auch möglich daß die nach unten zusammenlaufenden Vorder- und Rückwände einen Wulst bilden, der im Bereich der unteren Kante der Durchlaßöffnung in einer Fangausnehmung gelagert und mittels Arretierungselementen gesichert ist. Außerdem ist es möglich, daß der aus Vorder- und Rückwand gebildete Wulst in einer rillenförmigen Aussparung eines Trägers im Bereich der unteren Kante der Durchlaßöffnung gelagert ist.

In weiterer Ausgestaltung der Erfindung ist es vorteilhaft, daß der Trichter in einem Rahmen schwenkbar gelagert ist, der in der Durchlaßöffnung einsetzbar und mittels Schraubenbolzen sicherbar ist, und daß im oberen Bereich der Vorderwand eine Griffleiste vorgesehen ist, wobei die obere Begrenzung der Griffleiste bzw. der Wandelemente einen Abstand zur oberen Kante der Durchlaßöffnung aufweist. Durch die Verwendung eines Rahmens zur Aufnahme der Verschlußvorrichtung läßt sich diese auf einfache Weise insgesamt entfernen. Da die obere Begrenzung der Verschlußvorrichtung bzw. der einzelnen Teile des Behälters bzw. der Griffleiste einen kleinen Abstand zur oberen Kante der Durchlaßöffnung aufweist, läßt sich die gesamte Verschlußvorrichtung nach oben anheben, bis das Lager der Verschlußvorrichtung den Wulst der Rückwand freigibt, so daß dann die Verschlußvorrichtung durch die Durchlaßöffnung nach vorne herausgenommen werden kann.

In der Zeichnung sind zwei Ausführungsbeispiele einer Verschlußvorrichtung für eine Durchlaßöffnung zur Entnahme von Erntegutproben in einem Sammelbehälter eines Mähdreschers nach der Erfindung schematisch dargestellt. Es zeigt:

Fig. 1 eine schematische Darstellung eines Mähdreschers mit der erfindungsgemäßen Verschlußvorrichtung,

Fig. 2 eine als trichterförmiger Aufnahmebehälter ausgebildete Verschlußvorrichtung in einer Schließstellung,

Fig. 3 ein weiteres Ausführungsbeispiel einer Verschlußvorrichtung.

In der Zeichnung ist mit 10 ein Mähdrescher bezeichnet, der mit vorderen Laufrädern 12 und hinteren steuerbaren Laufrädern 14 ausgerüstet ist. Der Mähdrescher 10 weist eine Fahrerkabine 16 sowie hinter der Fahrerkabine einen Sammelbehälter 18 auf, der im oberen Bereich mit einer über einen in der Zeichnung der Einfachheit halber nicht dargestellten Elevatorförderer beschickbaren Verteilerschnekke 20 ausgerüstet ist.

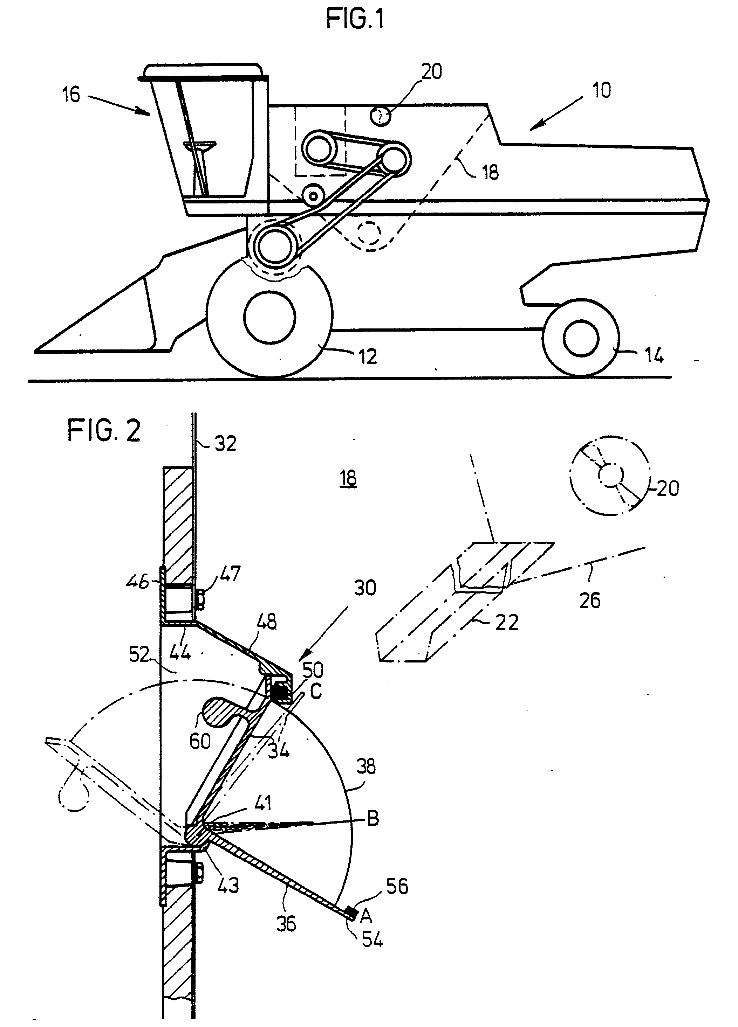

Unterhalb der Verteilerschnecke 20 befindet sich ein Aufnahmeteil 26, in dem ein Teil des aus dem Elevatorförderer abgegebenen Erntegutes aufgefangen wird, das dann einer geneigt verlaufenden Fördervorrichtung 22 in Form einer Schute zugeführt wird, die im Sammelbehälter 18 angeordnet ist und mittels in der Zeichnung nicht dargestellter Streben mit den Seitenwänden des Sammelbehälters verbunden sein kann. Das untere Ende der Fördervorrichtung 22 endet etwas oberhalb einer Verschlußvorrichtung 30, die in der Rückwand 32 der Fahrerkabine 16 vorgesehen ist. Die Rückwand 32 der Fahrerkabine 16 bildet gleichzeitig die Vorderwand des Sammelbehälters 18. Die Verschlußvorrichtung 30 nach Fig. 2 besteht aus einer Vorderwand 34 und einer Rückwand 36, die trichterförmig zusammenlaufen. Die Vorder- und Rückwand 34, 36 sind über dreieckförmig ausgebildete, mit Abstand zueinander angeordnete Seitenwände 38 miteinander verbunden.

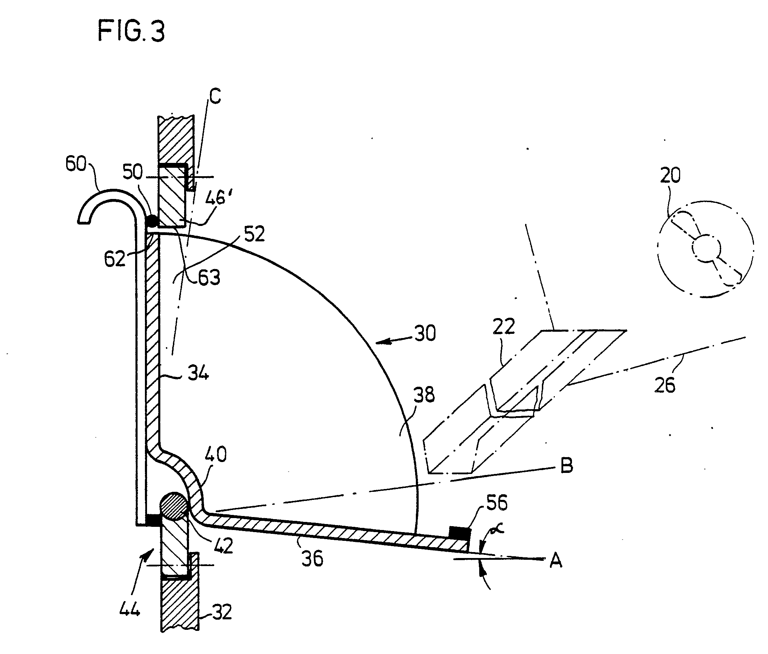

In Fig. 3 ist ein weiteres Ausführungsbeispiel für eine Verschlußvorrichtung 30 dargestellt. Die in Fig. 2 und Fig. 3 gleichen Teile der Verschlußvorrichtung 30 sind mit den gleichen Bezugszahlen gekennzeichnet. An der Stelle, an der die Vorderwand 34 und die Rückwand 36 aufeinandertreffen, bilden die Rückwand und die Vorderwand ein nach innen gewölbtes Lager 40 (Fig. 3) bzw. einen Wulst 41 (Fig. 2). Das Lager 40 sitzt auf einem Wulst 42 eines rechteckförmig ausgebildeten Rahmens 44 auf, während der Wulst 41 auf einem Träger 43 des Rahmens 44 aufsitzt. Der Rahmen 44 ist mit einem rechteckförmigen Flansch 46 ausgerüstet, der über Schraubenbolzen 47 mit der Rückwand 32 der Fahrerkabine 16 lösbar verbunden ist (siehe Fig. 2). Wie aus Fig. 3 hervorgeht, ist der Wulst 42 am Flansch 46' befestigt, der ebenfalls mit der Rückwand 32 lösbar verbunden sein kann. Der obere Teil des Rahmens 44 nach Fig. 2 ist mit einem geneigt verlaufenden Steg 48 ausgerüstet, der in das Innere des Sammelbehälters 18 hineinreicht. Das im Sammelbehälter 18 liegende Ende des Steges 48 ist ein wenig eingerollt und dient zur Aufnahme einer Dichtung 50. In der Normalstellung liegt die Vorderwand 34 mit ihrem oberen Ende gegen die Dichtung 50 an und verschließt auf diese Weise die in der Rückwand 32 vorgesehene Durchlaßöffnung 52. Die Rückwand 36 weist ebenfalls im Bereich ihrer oberen Kante 54 eine Dichtung 56 auf, die in der Stellung C der Verschlußvorrichtung 30 gegen das innenliegende Ende des Steges 48 zur Anlage kommt und auf diese Weise die Durchlaßöffnung 52 erneut verschließt. Die Dichtung 56 kann auch am Steg 48 befestigt sein.

Die Verschlußvorrichtung 30 nach Fig. 3 ist ebenfalls aus einer Vorderwand 34 und einer Rückwand 36 gebildet, die durch linke und rechte Seitenwände 38 miteinander verbunden sind. Die Verschlußvorrichtung 30 lagert ebenfalls in dem Rahmen 44, der in der gleichen vertikal verlaufenden Ebene verläuft wie die Rückwand 32 der Fahrerkabine 16. In der Stellung A bildet die Rückwand 36 gemäß Fig. 2 und 3 mit der Standfläche der Erntebergungsmaschine bzw. mit der Horizontalen einen nach vorne hin offenen spitzen Winkel $\alpha$, der in vorteilhafter Weise größer ist als der Schüttwinkel des aus der Fördervorrichtung 22 abgegebenen Erntegutes, so daß dieses beim Auftreffen auf die Rückwand 36 abrutschen kann und in den Sammelbehälter 18 gelangt.

Wird die Verschlußvorrichtung 30 nach vorne verschwenkt und gelangt dabei die Rückwand 36 in die Stellung B, so kann das Erntegut aus der Fördervorrichtung 22 über die Rückwand 36 aufgenommen werden und in der Verschlußvorrichtung 30 gehalten werden. Durch weiteres Verstellen der Verschlußvorrichtung 30 in die Stellung C, die der Stellung zur Entnahme des Erntegutes aus der Verschlußvorrichtung entspricht, ragt die Vorderwand 34 ein wenig in das Innere der Fahrerkabine 16, so daß die Bedienungsperson aus der Verschlußvorrichtung 30 ohne weiteres Erntegut entnehmen kann. In der Stellung C liegt die Rückwand 36 mit ihrer Dichtung 56 gegen die Innenseite des Rahmens 44 bzw. gegen die Kante des Steges 48 an und dichtet somit die Fahrerkabine 16 gegen den Sammelbehälter 18 ab. Da mittels der Verschlußvorrichtung 30 in der Stellung C sowie in der Stellung A die Durchlaßöffnung 52 stets verschlossen ist, kann der Druck in der Fahrerkabine, der bei Verwendung einer Klimaanlage geringfügig unter dem Atmosphärendruck liegt, aufrechterhalten werden. Lediglich in der Stellung B gibt die Vorderwand 34 bzw. die Rückwand 36 die Durchlaßöffnung kurzfristig frei, so daß ein kurzfristiger Druckabfall in der Fahrerkabine 16 auftreten kann. Da aber in der Stellung B der Öffnungsquerschnitt wesentlich kleiner ist als der Öffnungsquerschnitt der Durchlaßöffnung 52, ist der Druckabfall aus der Fahrerkabine in den Sammelbehälter relativ gering. Somit erfüllt die Verschlußvorrichtung 30 auf einfache Weise zwei Funktionen. Einmal dient sie zur vollständigen Abdichtung der Durchlaßöffnung 52 in der Rückwand 32 der Fahrerkabine, zum anderen läßt sich mit ihr ohne weiteres das aus dem Elevatorförderer abgegebene Erntegut kontrollieren, so daß die Bedienungsperson nicht zu warten braucht, bis sich der Sammelbehälter 18 mit Erntegut gefüllt hat, um dann das Erntegut aus dem Sammelbehälter zu entnehmen.

Zur Verschwenkung der Verschlußvorrichtung 30 ist die Vorderwand 34 im oberen Bereich mit einer Griffleiste 60 ausgerüstet, die beispielsweise aus einem U-Profil bestehen kann. Die obere Kante 62 der Vorderwand 34 weist zur oberen Kante 63 des Flansches 46' (Fig. 3) einen Abstand auf, so daß die Verschlußvorrichtung 30 angehoben werden kann, bis das Lager 40 den Wulst 42 bzw. der Wulst 41 den Träger 43 freigibt und somit die Verschlußvorrichtung aus der Durchlaßöffnung 52 herausgenommen werden kann.

**Patentansprüche**

1. Verschlußvorrichtung (30) für den Sammelbehälter (18) einer Erntebergungsmaschine, insbesondere Mähdrescher (10), mit einer im Sammelbehälter vorgesehenen, zur Entnahme von Erntegutproben ausgebildeten Durchlaßöffnung (52), die mittels einer verschwenkbaren Klappe verschließbar ist, die unterhalb einer Fördervorrichtung (22) verschwenkbar ist, dadurch gekennzeichnet, daß die Klappe zur Aufnahme von Erntegutproben einen Behälter aufweist, der eine Vorderwand (34) und eine Rückwand (36) sowie die Vorder- und Rückwand miteinander verbindende Seitenwände (38) aufweist, wobei in der ersten die Durchlaßöffnung (52) verschließenden Stellung (A) die Rückwand (36) sich in den Sammelbehälter (18) erstreckt und unterhalb der Fördervorrichtung (22) endet und in einer zweiten Stellung (C) zur Entnahme der Erntegutproben die Durchlaßöffnung ebenfalls verschließt.

2. Vorrichtung nach Anspruch 1, dadurch gekennzeichnet, daß die Rückwand (36) des Behälters in der ersten Stellung (A) mit der Horizontalen bzw. der Standfläche der Erntebergungsmaschine einen spitzen Winkel bildet, der größer ist als der Schüttwinkel des auf die Rückwand (36) auftreffenden Erntegutes.

3. Vorrichtung nach Anspruch 1 oder 2, dadurch gekennzeichnet, daß in einer zweiten bzw. einer Mittelstellung (B) zumindest die obere Begrenzung der Rückwand (36) und der Vorderwand (34) einen in etwa gleichen Abstand zur oberen Kante der Durchlaßöffnung (52) aufweist.

4. Vorrichtung nach einem oder mehreren der vorhergehenden Ansprüche, dadurch gekennzeichnet, daß die Vorder-, die Rück- und die Seitenwände (34, 36, 38) einen Trichter zur Aufnahme von Erntegutproben bilden.

5. Vorrichtung nach einem oder mehreren der vorhergehenden Ansprüche, dadurch gekennzeichnet, daß die Vorderwand (34) und die Rückwand (36) trichterförmig zusammenlaufen und im Bereich der Stelle, an der die Vorder- und Rückwand zusammentreffen, ein nach innen gewölbtes Lager (40) bilden, das auf einem Wulst (42) im Bereich der unteren Kante der Durchlaßöffnung (52) aufsitzt.

6. Vorrichtung nach einem oder mehreren der vorhergehenden Ansprüche 1-4, dadurch gekennzeichnet, daß die nach unten zusammenlaufenden Vorder- und Rückwände (34, 36) einen Wulst (41) bilden, der im Bereich der unteren Kante der Durchlaßöffnung (52) in einer Fangausnehmung gelagert und mittels Arretierungselementen gesichert ist.

7. Vorrichtung nach Anspruch 6, dadurch gekennzeichnet, daß der aus Vorder- und Rückwand (34, 36) gebildete Wulst (41) in einer rillenförmigen Aussparung eines Trägers (43) im Bereich der unteren Kante der Durchlaßöffnung (52) gelagert ist.

8. Vorrichtung nach Anspruch 4, dadurch gekennzeichnet, daß der Trichter in einem Rahmen (44) schwenkbar gelagert ist, der in der Durchlaßöffnung (52) einsetzbar und mittels Schraubenbolzen (47) sicherbar ist.

9. Vorrichtung nach einem oder mehreren der vorhergehenden Ansprüche, dadurch gekennzeichnet, daß im oberen Bereich der Vorderwand (34) eine Griffleiste (60) vorgesehen ist, wobei die obere Begrenzung der Griffleiste bzw. der Wandelemente einen Abstand zur oberen Kante (63) der Durchlaßöffnung (52) aufweist.

## Claims

1. Closure device (30) for the collecting container (18) of a harvesting machine, especially a combine harvester (10), with a through opening (52) provided in the collecting container, formed for the removal of harvested goods samples, which is closable by means of a hinged flap, which can be pivoted below a conveyer device (22), characterized in that the flap for the reception of harvested goods samples comprises a container, which comprises a front wall (34) and a rear wall (36) as well as side walls (38) connecting together the front and rear walls, wherein, in the first position (A) closing the through opening (52) the rear wall (36) extends into the collecting container (18) and ends below the conveyer device (22) and, in a second position (C) for the removal of the harvested goods samples also closes the through opening.

2. Device according to claim 1, characterized in that the rear wall (36) of the container forms an acute angle with the horizontal or the standing surface of the harvesting machine in the first position (A), which angle is greater than the angle of repose of the harvested material getting on to the rear wall (36).

3. Device according to claim 1 or 2, characterized in that in a second or a middle position (B) at least the upper margin of the rear wall (36) and the front wall (34) have approximately the same spacing from the upper edge of the through opening (52).

4. Device according to one or more of the preceding claims, characterized in that the front, rear and side walls (34, 36, 38) form a funnel for the reception of the harvested goods samples.

5. Device according to one or more of the preceding claims, characterized in that the front wall (34) and the rear wall (36) converge like a funnel and in the region in which the front and rear walls meet, form an inwardly curved bearing (40), which seats on a bead (42) in the region of the lower edge of the through opening (52).

6. Device according to one or more of the preceding claims 1–4, characterized in that the downwardly converging front and rear walls (34, 36) form a bead (41) which is mounted in a receiving recess in the region of the lower edge of the through opening (52) and is secured by means of stop elements.

7. Device according to claim 6, characterized in that the bead (41) formed by the front and rear walls (34, 36) is mounted in a channel-formed recess of a support (43) in the region of the lower edge of the through opening (52).

8. Device according to claim 4, characterized in that the funnel is mounted pivotally in a frame (44), which can be fitted into the through opening (52) and be secured by means of screws (47).

9. Device according to one or more of the preceding claims, characterized in that in the upper region of the front wall (34) there is provided a gripping bar (60), the upper margin of the gripping bar or of the wall elements being spaced from the upper edge (63) of the through opening (52).

## Revendications

1. Dispositif de fermeture (30) pour le réservoir-collecteur (18) d'une moissonneuse, en particulier d'une moissonneuse-batteuse(10), comportant une ouverture de passage (52) prévue dans le réservoir, conformée pour le prélèvement d'échantillons de produits de récolte, qui peut être fermée au moyen d'un volet pivotant qui peut pivoter au-dessous d'un dispositif de transport (22), caractérisé en ce que le volet comporte, pour recevoir des échantillons de produits de récolte, un récipient qui comporte une paroi antérieure (34) et une paroi postérieure (36), ainsi que des parois latérales (38) reliant la paroi antérieure et la paroi postérieure entre elles, la paroi postérieure (36) s'étendant, dans la première position (A) fermant l'ouverture de passage (52), à l'intérieur du réservoir (18) et s'achevant au-dessous du dispositif de transport (22) et fermant également l'ouverture de passage dans une seconde position (C) pour le prélèvement des échantillons de produits de récolte.

2. Dispositif suivant la revendication 1, caractérisé en ce que la paroi postérieure (36) du récipient fait, dans la première position (A), avec l'horizontale ou la surface d'appui de la moissonneuse, un angle aigu supérieur à l'angle de déversement des produits de récolte rencontrant la paroi postérieure (36).

3. Dispositif suivant la revendication 1 ou 2, caractérisé en ce que, dans une seconde position ou une position intermédiaire (B), au moins la limite supérieure de la paroi postérieure (36) et de la paroi antérieure (34) présente une distance sensiblement égale au bord supérieur de l'ouverture de passage (52).

4. Dispositif suivant une ou plusieurs des revendications précédentes, caractérisé en ce que la paroi antérieure, la paroi postérieure et les parois latérales (34, 36, 38) forment un entonnoir pour la réception d'échantillons de produits de récolte.

5. Dispositif suivant une ou plusieurs des revendications précédentes, caractérisé en ce que la paroi antérieure (34) et la paroi postérieure (36) convergent en entonnoir et forment dans la zone de l'endroit où la paroi antérieure et la paroi postérieure se rencontrent un appui (40) bombé vers l'intérieur qui repose sur un renflement (42) dans la zone du bord inférieur de l'ouverture de passage (52).

6. Dispositif suivant une ou plusieurs des revendications précédentes 1 à 4, caractérisé en ce que les parois antérieure et postérieure (34, 36) convergeant vers le bas forment un renflement (41) qui est placé, dans la zone du bord inférieur de l'ouverture de passage (52), dans un évidement d'interception et est fixé au moyen d'éléments de verrouillage.

7. Dispositif suivant la revendication 6, caractérisé en ce que le renflement (41) formé par la paroi antérieure et la paroi postérieure (34, 36) est placé dans un évidement en forme de rainure d'une entretoise de bâti (43) dans la zone du bord inférieur de l'ouverture de passage (52).

8. Dispositif suivant la revendication 4, caractérisé en ce que l'entonnoir est placé de façon à pouvoir pivoter dans un bâti (44) qui peut être inséré dans l'ouverture de passage (52) et être bloqué au moyen de boulons (47).

9. Dispositif suivant une ou plusieurs des revendications précédentes, caractérisé en ce qu'il est prévu, dans la zone supérieure de la paroi antérieure (34), un rebord de prise (60), la limite supérieure du rebord de prise ou des éléments de paroi présentant une certaine distance au bord supérieur (63) de l'ouverture de passage (52).

# FIG.1

# FIG. 2

FIG.3